(19) Europäisches Patentamt
European Patent Office
Office européen des brevets

(11) **EP 4 080 076 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **22165199.5**

(22) Anmeldetag: **29.03.2022**

(51) Internationale Patentklassifikation (IPC):
***F16D 41/069*** (2006.01)

(52) Gemeinsame Patentklassifikation (CPC):
**F16D 23/06; F16D 41/07; F16D 41/082;**
F16D 2023/0662; F16D 2023/0668

(54) **UMSCHALTBARE FREILAUFEINRICHTUNG FÜR EINE GETRIEBEANORDNUNG**

SWITCHABLE FREEWHEEL FOR A TRANSMISSION ARRANGEMENT

DISPOSITIF DE ROUE LIBRE COMMUTABLE POUR UN DISPOSITIF DE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2021   DE 102021203905**

(43) Veröffentlichungstag der Anmeldung:
**26.10.2022   Patentblatt 2022/43**

(73) Patentinhaber: **Magna PT B.V. & Co. KG 74199 Untergruppenbach (DE)**

(72) Erfinder:
• **BÄHR, Julian 40668 Meerbusch (DE)**
• **PFANNSCHMIDT, Jörn 74889 Sinsheim (DE)**

(74) Vertreter: **Reuter, Silke Beatrix Magna International (Germany) GmbH Kurfürst-Eppstein-Ring 11 63877 Sailauf (DE)**

(56) Entgegenhaltungen:
**DE-A1-102016 223 102     DE-A1-102017 216 322**
**DE-A1-102017 216 690     DE-A1-102020 107 957**

Processed by Luminess, 75001 PARIS (FR)

**Beschreibung**

Die vorliegende Erfindung betrifft eine Getriebeanordnung die ein erstes Losrad, ein zweites Losrad, einen Verdrehanschlag und eine umschaltbare Freilaufeinrichtung umfasst.

Klassische Doppelkupplungsgetriebe weisen neben der Doppelkupplungsanordnung eine Getriebeanordnung auf, die zwei Teilgetriebe beinhaltet. Das eine Teilgetriebe ist dabei üblicherweise den ungeraden Gangstufen zugeordnet. Das andere Teilgetriebe ist dabei üblicherweise den geraden Gangstufen zugeordnet. Die Gangstufen werden durch Radpaarungen dargestellt. Durch die Verwendung von Fest- und Losrädern sowie Schaltkupplungen sind verschiedene Antriebsszenarien darstellbar.

Mit einem derartigen Doppelkupplungsgetriebe können Gangwechsel durch überschneidendes Betätigen der zwei Kupplungen ohne Zugkraftunterbrechung durchgeführt werden.

Überwiegend werden solche Getriebe in Kraftfahrzeugantriebssträngen verbaut, insbesondere für Personenkraftwagen, aber auch für Nutzfahrzeuge.

In derartigen Anwendungsumgebungen müssen Getriebe unterschiedlichste Anforderungen erfüllen. Zum einen sollte die Anzahl der Gangstufen möglichst hoch sein, um letztlich eine möglichst hohe Spreizung zu erzielen, was dem Fahrkomfort aber auch dem Kraftstoffverbrauch zugutekommen kann. Andererseits unterliegen derartige Getriebe engen Bauraumeinschränkungen, und zwar sowohl hinsichtlich der axialen Länge als auch der radialen Größe.

Ein bauraumoptimiertes Doppelkupplungsgetriebe ist beispielsweise aus dem Dokument DE 10 2013 104 468 A1 bekannt. Dieses bekannte Doppelkupplungsgetriebe ist in Drei-Wellen-Bauweise ausgeführt, also mit einer Getriebeeingangswellenanordnung und zwei parallel hierzu versetzt angeordneten Ausgangswellen, die jeweils über Abtriebszahnräder mit einem Differential in Eingriff stehen. Hierdurch kann für eine bestimmte Anzahl von Vorwärtsgangstufen die axiale Baulänge deutlich verringert werden. Zudem können sogenannte Doppelnutzungen realisiert werden, bei denen ein mit einer Getriebeeingangswelle verbundenes Festrad sowohl mit einem Losrad an der einen Ausgangswelle als auch mit einem Losrad an der anderen Ausgangswelle in Eingriff steht.

Ferner weist das Doppelkupplungsgetriebe, das aus dem Dokument DE 10 2013 104 468 A1 bekannt geworden ist, eine Brückenkupplung auf. Diese Brückenkupplung ist bei dem bekannten Getriebe an einer der Ausgangswellen angeordnet und ist dazu ausgelegt, die zwei Getriebeeingangswellen der Getriebeeingangswellenanordnung über zwei Radsätze miteinander zu verbinden, von denen einer dem ersten Teilgetriebe und der andere dem anderen Teilgetriebe zugeordnet ist. Hierdurch lässt sich unter Nutzung von zwei Radsätzen eine weitere Gangstufe realisieren. Die als Schaltkupplung ausgeführte Brückenkupplung ist dabei zwischen zwei schaltbaren Losrädern vorgesehen, um diese Losräder miteinander zu verbinden. Besteht eine derartige drehfeste Verbindung kann ein weiterer Vorwärtsgang geschaffen werden, der eine andere Übersetzung aufweist.

Die obenstehend beschriebene Realisierung einer weiteren Gangstufe über eine Brückenschaltung erfordert allerdings generell die Betätigung von zwei Schaltkupplungen und eine aufwändige Ansteuerung.

Schaltkupplungen werden üblicherweise mittels einer Synchronisierungseinheit betrieben. Hierbei werden die unterschiedlichen Drehzahlen von den zu schaltenden Bauteilen, vor dem Herstellen einer formschlüssigen Verbindung zwischen den beiden Bauteilen, aneinander angeglichen. Es sind unterschiedliche Ausführungsformen von Synchronisationseinheiten bekannt, wobei häufig die sogenannte Sperrsynchronisation eingesetzt wird, die zur Synchronisation kegelförmige Reibflächen verwendet. Hierbei können die sogenannte Einkonus-Synchronisation (eine Reibfläche) und Mehrkonus-Synchronisation (zwei oder mehr Reibflächen) unterschieden werden.

Eine derartige Synchronisationseinheit ist beispielsweise aus der WO 2017/220493 A1 bekannt.

Weiterhin ist eine Synchronisationseinheit aus der DE 10 2008 017 876 B4 bekannt.

Aus dem Dokument DE 10 2016 223 102 A1 ist eine Freilaufeinrichtung bekannt, welche zwischen zwei zu koppelnden drehbar gelagerten Bauteilen in einem ersten Funktionszustand in einer Drehrichtung eine Drehbewegung (Leerlauf/Freilaufeinrichtung offen) und in einem zweiten Funktionszustand in der entgegengesetzten Drehrichtung die Übertragung eines Drehmoments zwischen den Bauteilen (Freilaufeinrichtung gesperrt) ermöglicht. Die Herstellung einer drehfesten Verbindung wird hierdurch drehrichtungsabhängig realisiert. Die bekannte Freilaufvorrichtung umfasst einen Innenring und einen Außenring sowie mindestens eine radial zwischen dem Innenring und dem Außenring angeordnete Kupplungsscheibe. Der Außenring weist an einer Innenumfangsfläche Rampen auf, die mit korrespondierend dazu ausgebildeten Rampen an der mindestens einen Kupplungsscheibe zusammenwirken, um in der ersten Drehrichtung des Außenrings eine Freilauffunktion und bei einer Rotation in der zweiten Drehrichtung des Außenrings eine Sperrfunktion zwischen dem Innenring und dem Außenring zu ermöglichen. Des Weiteren weist die Freilaufeinrichtung einen Verstellring auf, der stirnseitig am Außenring axial verschiebbar angeordnet ist, und der bei einer axialen Betätigung dazu vorgesehen ist, den Außenring mit dem Käfig zu koppeln, um auch bei der Rotation des Außenrings in der zweiten Drehrichtung eine Freilauffunktion zwischen dem Innenring und dem Außenring zu ermöglichen.

Ausgehend von dem Stand der Technik stellt sich die vorliegende Erfindung die Aufgabe eine Getriebeanordnung in kompakter Bauweise mit einer möglichst großen Anzahl an Gangstufen derart weiterzubilden, dass die Nachteile der bekannten Ausführungen vermieden werden und insbesondere der Aufwand in der Ansteuerung, und die Anzahl der Bauteile reduziert werden. Des Weiteren soll das Schwingungsverhalten beim Schaltvorgang verbessert werden.

Diese Aufgabe löst die vorliegende Erfindung durch eine Getriebeanordnung mit umschaltbarer Freilaufeinrichtung mit den in Patentanspruch 1 angegebenen Merkmalen.

Die vorliegende Erfindung ersetzt die eingangs als Schaltkupplung beschriebene Brückenkupplung, die zwischen zwei schaltbaren Losrädern vorgesehen ist, um diese Losräder miteinander zu verbinden. Anstelle der üblichen Brückenkupplung wird die erfindungsgemäße Freilaufeinrichtung zwischen zwei schaltbaren Losrädern zur Herstellung einer drehfesten Verbindung eingesetzt. Hierdurch kann ohne aufwändige Ansteuerung und mit geringem Bauteilaufwand ein weiterer Vorwärtsgang geschaffen werden, der eine andere Übersetzung aufweist. Insbesondere kann auch das Schwingungsverhalten einer Getriebeanordnung verbessert werden, wenn beide mit der Freilaufeinrichtung zu koppelnden Losräder mit der zugeordneten Getriebewelle geschaltet, d.h. in einer drehfesten Verbindung sind.

Grundsätzlich ist eine Freilaufeinrichtung aus dem Stand der Technik, beispielsweise aus der DE 10 2020 107 957 A1, bekannt und ermöglicht zwischen zwei zu koppelnden drehbar gelagerten Bauteilen in einem ersten Funktionszustand in einer Drehrichtung eine Drehbewegung (Leerlauf/Freilaufeinrichtung offen) und in einem zweiten Funktionszustand in der entgegengesetzten Drehrichtung die Übertragung eines Drehmoments zwischen den Bauteilen (Freilaufeinrichtung gesperrt). Die Herstellung einer drehfesten Verbindung wird hierdurch drehrichtungsabhängig realisiert. Eine bekannte Freilaufeinrichtung umfasst üblicherweise einen Außenring, einen Innenring und mehrere zwischen dem Außenring und dem Innenring wirksame Klemmkörper. Bei der Anwendung in Getriebeanordnungen ist der Außenring dabei mit dem einen zu koppelnden Losrad und der Innenring ist mit dem anderen zu koppelnden Losrad fest verbunden.

Im Gegensatz zu der bekannten Ausführung und Anordnung der Freilaufeinrichtung ist die erfindungsgemäße Ausführung der Freilaufeinrichtung derart gestaltet, dass der Außenring relativ zu dem zu koppelnden Losrad drehbeweglich unter einem begrenzten Verdrehwinkel gelagert ist. Aufgrund dieser drehbeweglichen Lagerung zwischen Außenring der Freilaufeinrichtung und zu koppelndem Losrad ist es möglich, beim Schaltvorgang das zu schaltende Losrad um den zum Freidrehen des Synchronrings und Eindocken in die Kupplungsverzahnung nötigen Winkel zu verdrehen und ein Blocken zu vermeiden.

Durch diese Verdrehmöglichkeit unter einem bestimmten Verdrehwinkel zwischen Losrad und Außenring der Freilaufeinrichtung kann die Schaltfunktion einer Schalteinrichtung mit Synchronisierungseinheit sichergestellt werden.

Die axiale Richtung ist nachfolgend die in Richtung der Drehachsen der Eingangs- und Ausgangswellen des Doppelkupplungsgetriebes verlaufende Richtung.

Eine Weiterbildung des Erfindungsgedankens sieht vor, dass die dem Freilaufaußenring und Freilaufinnenring zugeordneten ringförmigen Wirkflächen für die Klemmkörper als separate Bauteile bzw. Ringe ausgebildet sind. Hierdurch kann eine separate handelsübliche Baugruppe ausgebildet werden. Dies Baugruppe umfasst die Freilauffunktion mit einem äußeren ringförmigen Abschnitt, einem inneren ringförmigen Abschnitt und der zwischengelagerten Klemmkörperanordnung mit Klemmkörpern.

Vorteilhafte Ausgestaltungen der vorliegenden Erfindung sind in den Unteransprüchen angegeben.

Die Erfindung wird nachfolgend anhand in den Zeichnungen schematisch dargestellter Ausführungsbeispiele beschrieben.

Es zeigt:

Fig. 1          eine Ausgangswelle einer erfindungsgemäßen Getriebeanordnung mit Freilaufkupplung in einem Längsschnitt,

Fig. 2          ein Klemmkörperkäfig mit Klemmkörpern einer Freilaufkupplung als Baugruppe in einer perspektivischen Darstellung,

Fig. 3          eine perspektivische Darstellung eines Außenrings der Freilaufkupplung mit Klemmkörperkäfig und Klemmkörpern in einer montierten Situation mit Schaltrad/Losrad einer Gangstufe,

Fig. 4a          eine Schenkelfeder der Freilaufkupplung

Fig. 4b          ein Schaltrad/ Losrad einer Gangstufe mit Verzahnung und Gleitsitz im Fußkreis,

Fig. 4c          der Außenring der Freilaufkupplung mit Innenverzahnung und vergrößerten Zahnlücken für Freilaufwinkel,

Fig. 4d          eine perspektivische Darstellung des Außenrings der Freilaufkupplung ohne Klemmkörperkäfig und Klemmkörpern in einer montierten Situation mit Schaltrad/Losrad einer Gangstufe,

Fig. 5          ein Detail im Bereich zwischen der Verzahnung des Schaltrads und der Zahnlücken des Außenrings in einer Normalstellung,

Fig. 6          ein Detail im Bereich zwischen der Verzahnung des Schaltrads und der Zahnlücken des Außenrings während eines Synchronisationsvorgangs,

Fig. 7          ein Detail im Bereich zwischen der Verzahnung des Schaltrads und der Zahnlücken des Außenrings während des Ein-

| | |
|---|---|
| Fig. 8 | dockens der benachbarten Gangstufen, ein Detail im Bereich zwischen der Verzahnung des Schaltrads und der Zahnlücken des Außenrings in einer Stellung während des Fahrens in dem geschalteten Zustand mittels der Brückenschaltung durch Kopplung zwischen den benachbarten Losrädern, |
| Fig. 9 - 11 | Darstellungen der Freilaufkupplung, der Ausgangswelle sowie der Zahnstellungen bei der Synchronisierungsphase beim Fahren des zunächst eingelegten Gangs und Vorwählen des über die Freilaufeinrichtung gekoppelten Gangs, |
| Fig. 12 - 14 | Darstellungen der Freilaufkupplung, der Ausgangswelle sowie der Zahnstellungen bei der Freiflugphase beim Fahren des zunächst eingelegten Gangs und Vorwählen des über die Freilaufeinrichtung gekoppelten Gangs, |
| Fig. 15 - 17 | Darstellungen der Freilaufkupplung, der Ausgangswelle sowie der Zahnstellungen beim Eindocken beim Fahren des zunächst eingelegten Gangs und Durchschalten der Schiebemuffenverzahnung in die Kupplungsverzahnung des über die Freilaufeinrichtung gekoppelten Gangs; und |
| Fig. 18 - 19 | Darstellungen der Freilaufkupplung, sowie der Getriebeanordnung mit eingezeichnetem Kraftfluss in dem gekoppelten Zustand gemäß der Figur 8. |

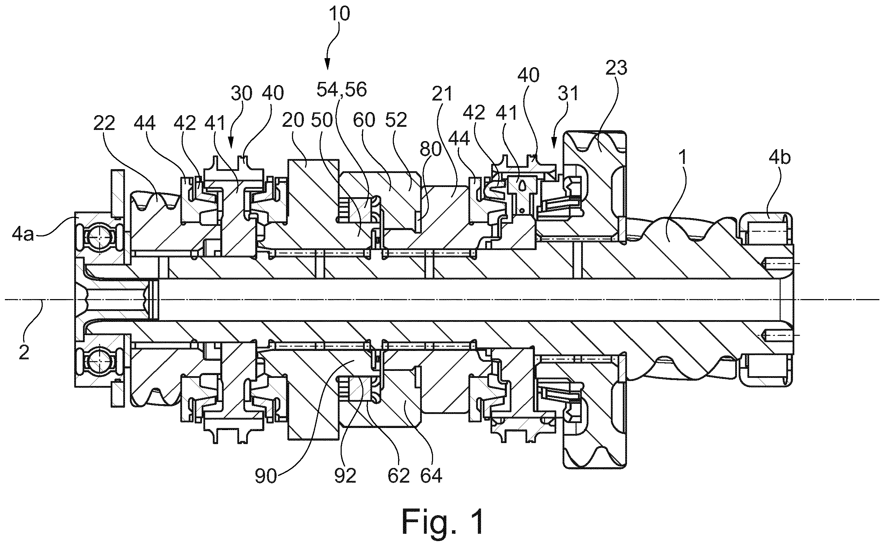

Die Figur 1 zeigt in einem Längsschnitt eine Ausgangswelle 1 einer erfindungsgemä-ßen Getriebeanordnung mit Freilaufeinrichtung 10 in einem Längsschnitt. Die Getriebeanordnung ist als Doppelkupplungsgetriebeanordnung ausgeführt. Die Ausgangswelle 1 umfasst eine Drehachse 2 und ist beidseits über Lageranordnungen 4a, 4b drehbar gelagert.

Auf der Ausgangswelle 1 sind wie nachfolgend beschrieben Losräder, Schaltkupplungen sowie die Freilaufeinrichtung 10 angeordnet. Die Losräder stehen in bekannter Art und Weise mit zugeordneten Festrädern einer ersten oder zweiten Eingangswelle der Getriebeanordnung in kämmendem Eingriff und bilden Zahnradpaare. Die Zahnradpaare dienen der Realisierung von unterschiedlichen Gangstufen. Die der ersten oder zweiten Eingangswelle der Getriebeanordnung angeordneten zugeordneten in Wirkverbindung stehenden Festräder sind der Einfachheit halber nicht dargestellt.

Die Freilaufeinrichtung 10 ist auf der Ausgangswelle 1 in einem mittleren Bereich zwischen zwei Losrädern angeordnet, die nachfolgend als erstes Losrad 20 und zweites Losrad 21 bezeichnet werden. Das erste Losrad 20, welches in kämmenden Eingriff mit einem Festrad steht, dient in dem gezeigten Beispiel einer Getriebeanordnung der Realisierung eines dritten Vorwärtsgangs (3. Gang). Das zweite Losrad 21, welches in kämmenden Eingriff mit einem Festrad steht, dient der Realisierung eines weiteren Vorwärtsgangs, hier beispielhaft des vierten Vorwärtsgangs (4. Gang).

Auf der linken Seite der Ausgangswelle 1 ist benachbart zu der Lageranordnung 4a ein drittes Losrad 22 angeordnet. Auf der rechten Seite der Ausgangswelle 1 ist benachbart zu der Lageranordnung 4b ein viertes Losrad 23 angeordnet.

Zwischen erstem Losrad 20 und drittem Losrad 22 ist eine erste Schaltkupplung 30 angeordnet. Die erste Schaltkupplung 30 dient der Herstellung einer drehfesten Verbindung des ersten Losrads 20 mit der Ausgangswelle 1 in einer ersten Schaltstellung und der Herstellung einer drehfesten Verbindung des dritten Losrads 22 mit der Ausgangswelle 1 in einer zweiten Schaltstellung.

Zwischen zweitem Losrad 21 und viertem Losrad 23 ist eine zweite Schaltkupplung 31 angeordnet. Die zweite Schaltkupplung 31 dient der Herstellung einer drehfesten Verbindung des zweiten Losrads 21 mit der Ausgangswelle 1 in einer ersten Schaltstellung und der Herstellung einer drehfesten Verbindung des vierten Losrads 23 mit der Ausgangswelle 1 in einer zweiten Schaltstellung.

Die erste und die zweite Schaltkupplung 30, 31 werden als Synchronisierungseinheit betrieben. Eine derartige Synchronisationseinheit ist wie eingangs genannt aus der WO 2017/ 220 493 A1 bekannt und umfasst im Wesentlichen eine Schaltmuffe 40 mit Schaltmuffenverzahnung/Innenverzahnung 45, einen Synchronkörper 41, einen Synchronring 42 mit zumindest einer ersten Reibfläche und Sperrverzahnung 43.

Des Weiteren ist das zu schaltende Losrad 20 bzw. 21 mit einer Schaltkupplungsverzahnung 44 sowie einer zur ersten Reibfläche korrespondierenden zweiten Reibfläche ausgeführt. Diese sogenannte Sperrsynchronisation ist dem Fachmann bekannt und wird daher nicht näher beschrieben. In der geschalteten Position der Schaltkupplung 30, 31 ist zur Erzielung der drehfesten Verbindung mit dem zu schaltenden Losrad 20 bzw. 21 eine formschlüssige Verbindung durch Zahneingriff der Schaltmuffenverzahnung 45 und der Schaltkupplungsverzahnung 44 hergestellt.

Die in axialer Richtung zwischen dem ersten Losrad 20 und zweiten Losrad 21 auf der Ausgangswelle 1 angeordnete Freilaufeinrichtung 10 ist hinsichtlich ihrer Grundfunktion aus dem Stand der Technik bekannt. Sie ermöglicht zwischen zwei zu koppelnden drehbar gelagerten Bauteilen in einer Drehrichtung eine Drehbewegung (Leerlauffunktion) und in der anderen Drehrichtung (Gegenrichtung) die Übertragung eines Drehmoments (Drehmomentübertragungsfunktion) zwischen den Bauteilen. In der gezeigten Anordnung auf der Ausgangswelle 1 der Doppelkupplungsgetriebeanordnung ermöglicht die Freilaufeinrichtung 10 in der ersten Drehrichtung einen Leerlauf zwischen dem ersten Losrad 20 und dem zweiten Losrad 21 und in der zweiten Drehrichtung die Übertragung eines Drehmoments zwischen erstem Losrad 20 und zweitem Losrad 21. In dieser zweiten Drehrichtung kann mittels der Drehmomentübertragungsfunktion eine sogenannte Brückenschaltung realisiert werden.

Es ist für den Fachmann selbstverständlich, dass die Getriebeanordnung nur beispielhaft ist und die erfindungsgemäße Freilaufeinrichtung 10 zwischen beliebigen benachbarten zu schaltenden Losrädern zwecks Herstellung einer Kopplung angeordnet sein kann. Die Erfindung ist auch nicht auf die beschriebenen Gangstufen beschränkt.

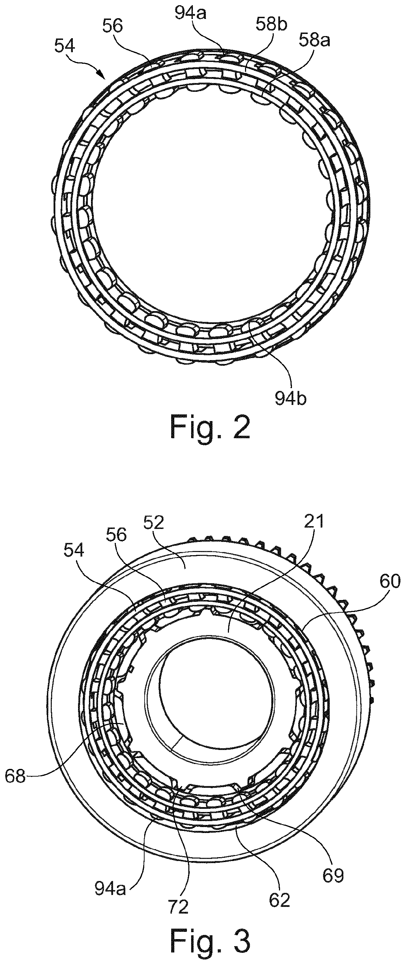

Anhand der Figuren 2, 3, 4a - 4d, 5-8 werden die Bauteile, die Einbausituation sowie mögliche Schaltstellungen der Freilaufeinrichtung 10 näher erörtert.

Um die oben genannten Funktionen zu gewährleisten, besteht die Freilaufeinrichtung 10 aus einem Freilaufinnenring 50 und einem Freilaufaußenring 52 zwischen denen eine Klemmkörperanordnung zwischengeschaltet angeordnet ist. Diese umfasst einen Klemmkörperkäfig 54 mit einer Vielzahl von Klemmkörpern 56.

Der Freilaufaußenring 52 ist dabei koaxial auf dem zweiten Losrad 21 um einen Freilaufwinkel Alpha verdrehbar gelagert. Hierfür ist das zweite Losrad 21 mit einem ringförmigen Lagerabschnitt 70 ausgeführt, wobei der Lagerabschnitt 70 eine Verzahnung 72 aufweist. Die Verzahnung 72 umfasst eine Vielzahl von über den Umfang des ringförmigen Lagerabschnitts 70 angeordneten Zähnen 74. Die Zähne 74 bilden beidseits, in Umfangsrichtung gesehen, Anschlagflächen 74a, 74b aus. Der Fußkreis der Verzahnung 72 ist als Gleitsitz ausgebildet. Des Weiteren ist in den ringförmigen Lagerabschnitt 70 eine Nut 76 zur Festlegung eines Federelements 80 eingebracht.

Das Federelement 80 ist als Schenkelfeder aus einem Federdraht ausgeführt und umfasst einen ringförmigen Abschnitt 81 und endseitig abgewinkelt ausgeführte als Hebelarme ausgeführte Halteabschnitte 82a, 82b. Das Federelement 80 ist in der montierten Situation mittels des ersten Halteabschnitts 82a in der Nut 76 festgelegt.

Der Freilaufaußenring 52 umfasst einen ersten ringförmigen Abschnitt 60, welcher an seinem Innenumfang eine ringförmige Wirkfläche 62 für die Klemmkörper 56 bildet. Des Weiteren umfasst der Freilaufaußenring 52 einen axial benachbart ausgeführten zweiten ringförmigen Abschnitt 64 der an seinem Innenumfang 66 mit einer Verzahnung 68 ausgeführt ist. Die Verzahnung 68 weist dabei Zahnlücken 69 auf. Die Zahnlücken 69 werden durch Anschlagflächen 69a, 69b begrenzt. Der Kopfkreis der Verzahnung 68 ist als Gleitsitz ausgeführt. Des Weiteren ist im Bereich des zweiten ringförmigen Abschnitts 64 eine Axialbohrung 78 zur Festlegung des zweiten Halteabschnitts 82b eingebracht.

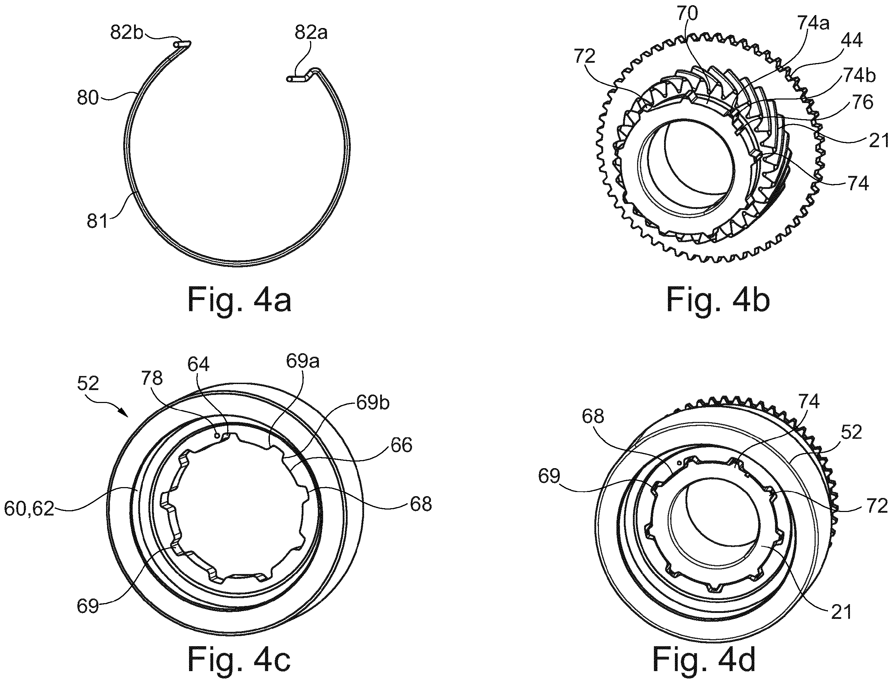

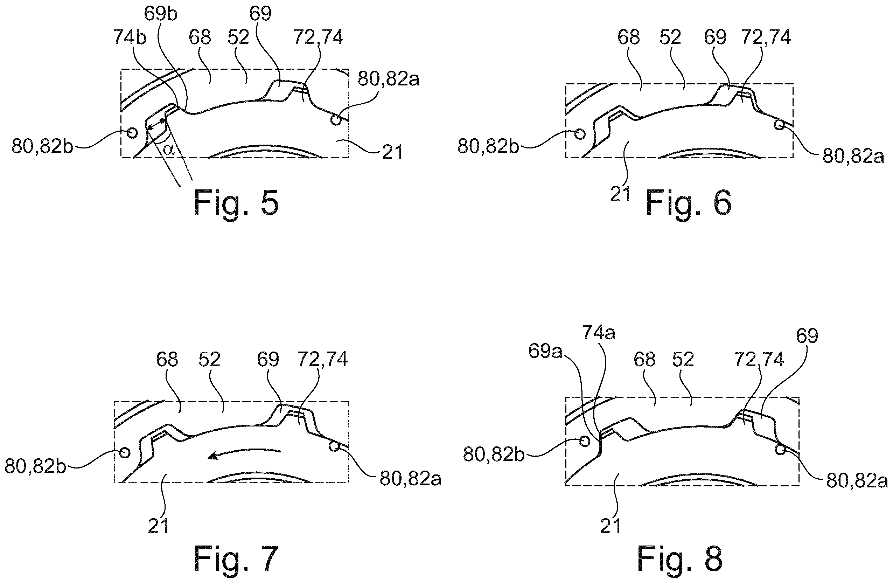

Aus der in der Figur 4d gezeigten montierten Situation des Freilaufaußenrings 52 auf dem zweiten Losrad 21 ist ersichtlich, dass die Verzahnung 72 des zweiten Losrads 21 in die Verzahnung 68 des Freilaufaußenrings 52 greift und in Wirkverbindung derart steht, dass das Losrad 21 in Bezug auf den Freilaufaußenring 52 relativ um einen Winkel Alpha verdrehbar um die Drehachse 2 gelagert sind. Um dieses Verdrehspiel um den Winkel Alpha zu erreichen sind die Zahnlücken 69 des Freilaufaußenrings 52 in Umfangsrichtung gesehen vergrößert ausgeführt. Dies ist in den Figuren 5 und 8 mit dem Pfeil angezeigt. Dieses Verdrehspiel wird durch die aufeinandertreffenden Anschlagflächen 74b/69b bzw. 74a/69a begrenzt. Die aufeinandertreffenden Anschlagflächen bilden dabei in beide Drehrichtungen einen Verdrehanschlag.

Die zuvor beschriebene ineinandergreifende Verzahnung 72 des zweiten Losrads 21 in die Verzahnung 68 des Freilaufaußenrings 52 mit vergrößerten Zahnlücken 69 zur Erzielung einer begrenzten Verdrehbeweglichkeit zwischen Losrad 21 und Freilaufaußenring 52 stellt eine mögliche Ausführungsform dar. In alternativen nicht dargestellten Ausführungsformen kann die begrenzte Verdrehbarkeit in Umfangsrichtung und die Realisierung eines definierten Verdrehanschlags zur Übertragung eines Drehmoments zwischen diesen Bauteilen auch durch Nocken, Stifte oder ähnliche Elemente erzielt werden.

Der Freilaufinnenring 50 der Freilaufeinrichtung 10 wird durch einen ringförmigen Lagerabschnitt 90 des ersten Losrads 20 gebildet. Das Losrad 20 ist hierfür entweder einteilig mit dem ringförmigen Lagerabschnitt 90 ausgeführt, oder es kann auch ein separater den ringförmigen Lagerabschnitt bildender Ringabschnitt ausgebildet sein, der mit dem Losrad 20 drehfest verbunden ist. Der ringförmige Lagerabschnitt 90 weist an seinem Außenumfang eine ringförmige Wirkfläche 92 für die Klemmkörper 56 auf.

Als weitere Bauteilgruppe der Freilaufeinrichtung 10 ist in der Figur 2 der Klemmkörperkäfig 54 mit den Klemmkörpern 56 gezeigt. Aus der perspektivischen Darstellung kann man ersehen, dass der Klemmkörperkäfig 54 aus zwei Klemmkörperringen 58a, 58b ausgeführt ist. Radial zwischen den Klemmkörperringen 58a, 58b sind die Klemmkörper 56 gelagert. Die Klemmkörperringe 58a, 58b sind koaxial zueinander angeordnet und werden nachfolgend als innerer und äußerer Klemmkörperring bezeichnet. Zur Lagerung der Klemmkörper 56 sind die Klemmkörperringe 58a, 58b mit entsprechenden Ausnehmungen versehen, so dass die Klemmkörper 56 über den Umfang verteilt in einer definierten Position zueinander gehalten werden.

Selbstverständlich können auch andere Formen von Klemmkörperführungen eingesetzt werden, bei denen die Klemmkörper 56 radial auf eine Wirkfläche drücken, die im Freilaufaußenring 52 befestigt wird.

Die Klemmkörper 56 sind in dem Ausführungsbeispiel riegelförmig ausgeführt und weisen jeweils eine in radialer Richtung gesehen obere und untere Wirkfläche 94a, 94b auf, die vorzugsweise ballig ausgeführt sind. Es können allerdings auch andere Ausführungsformen von Klemmkörpern eingesetzt werden.

Die Figur 3 zeigt in einer teilweise montierten Situation der Freilaufeinrichtung 10 in einer perspektivischen Ansicht den Freilaufaußenring 52 montiert auf dem zweiten Losrad 21 mit eingesetzter Bauteilgruppe bestehend aus Klemmkörperkäfig 54 mit Klemmkörpern 56. Der Klemmkörperkäfig 54 mit Klemmkörpern 56 ist hierbei im Bereich des ersten ringförmigen Abschnitt 60 angeordnet, wobei die Klemmkörper 56 mittels ihrer oberen balligen Wirkflächen 94a an der ringförmigen Wirkfläche 62 des Freilaufaußenrings 52 anliegen.

In der komplett montierten Situation der Feilaufeinrichtung 10, die in der Figur 1 dargestellt ist, liegen die Klemmkörper 56 mittels ihrer unteren balligen Wirkflächen 94b auf den ringförmigen Wirkflächen 92 des ringförmigen Lagerabschnitts 90 des ersten Losrads 20 an. Zur Herstellung einer Federvorspannung zwischen Losrad 21 und Freilaufaußenring 52 ist das Federelement 80 über den ersten Halteabschnitt 82a in der Nut des zweiten Losrads 21 festgelegt und über den zweiten Halteabschnitt 82b in der Axialbohrung 78 des Freilaufaußenrings 52 gehalten. In einer alternativen Ausführungsform können auch andere Rückstellelemente anstelle des Federelements 80 zwischen erstem Losrad 21 und Freilaufaußenring 52 angeordnet sein.

Die Freilaufeinrichtung 10 umfasst dabei eine Antriebsseite und eine Abtriebsseite. Über die Antriebsseite erfolgt die Kraftübertragung über die Klemmkörper 56 auf die Abtriebsseite.

Bei einer Drehbewegung der Ausgangswelle 1 in Leerlaufrichtung gleiten die Klemmkörper 56 an den rotierenden ringförmigen Wirkflächen 62 sowie 92. Das Drehmoment der Antriebsseite wird nicht auf die Abtriebsseite übertragen. Erfolgt hingegen eine Drehbewegung der Ausgangswelle 1 gegen die Leerlaufrichtung, entsteht Kraftschluss durch Haftreibung an den Kontaktflächen zwischen den rotierenden ringförmigen Wirkflächen 62 bzw. 92 des Freilaufaußenrings bzw. Freilaufinnenrings und den Klemmkörpern 56. Das Drehmoment wird ausgehend von der Antriebsseite über die Klemmkörper 56 auf die Abtriebsseite übertragen.

Die Verdrehbeweglichkeit um einen Freilaufwinkel Alpha zwischen dem Losrad 21 und dem Freilaufaußenring 52 ist anhand unterschiedlicher Situationen in Detaildarstellungen in den Figuren 5 - 8 gezeigt.

Figur 5 zeigt als Ausgangsstellung eine nicht geschaltete Normalstellung. In dieser Normalstellung ist das erste Losrad 20 geschaltet (erste Schaltkupplung 30 in erster Schaltstellung) und das zweite Losrad 21 nicht geschaltet (zweite Schaltkupplung 31 in Neutralstellung). Die Zähne 74 der Verzahnung 72 liegen mit ihren Anschlagflächen 74b auf der rechten Seite an den die Zahnlücken 69 begrenzenden Anschlagflächen 69b an.

Fig. 6 zeigt eine Situation während des Synchronisierungsvorgangs wobei das erste Losrad 20 geschaltet ist und das über die Freilaufeinrichtung 10 gekoppelte zweite Losrad 21 (4. Gangstufe) vorgewählt wird, d.h. Schalten des zweiten Losrads 21 mittels der zweiten Schaltkupplung 31 in die erste Schaltstellung.

(Synchronring verdrehen; dabei Erhöhung der Federvorspannung des Federelements 80)

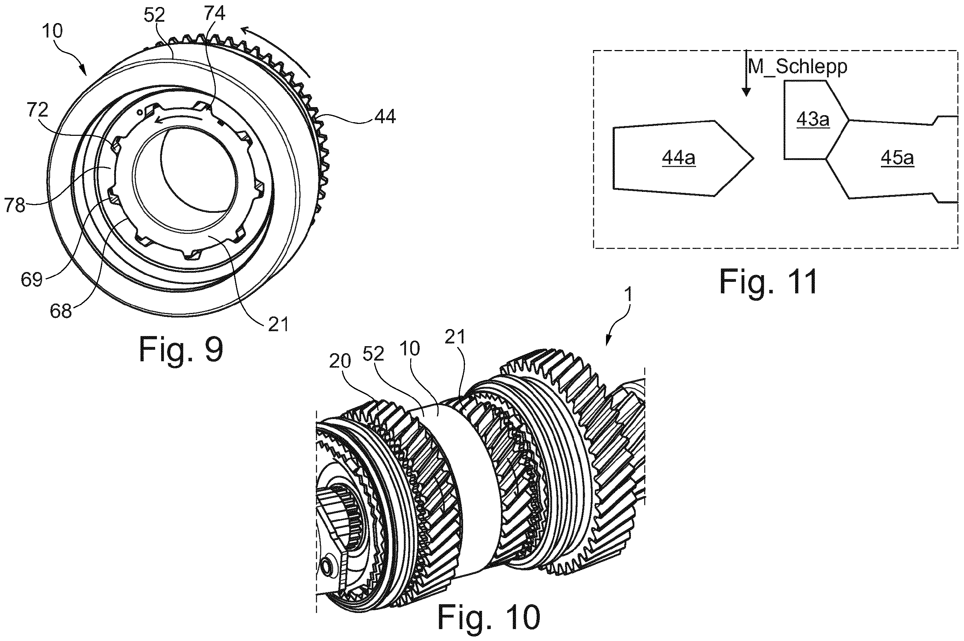

In dieser sogenannten Synchronisierungsphase, die anhand der Figuren 9, 10, 11 gezeigt ist, sind die Drehzahlen des ersten und zweiten Losrads, sowie die Zustände der zweiten Schaltkupplung 31 wie folgt:

n20= Drehzahl des ersten Losrads 20
n21 = Drehzahl des zweiten Losrads 21

$$n20 < n21$$

Die Freilaufeinrichtung 10 ist daher offen, d.h. es wird kein Drehmoment von dem ersten Losrad 20 über den Freilaufinnenring 50, die Klemmkörper 56 auf den Freilaufau-ßenring 52 und somit auf das zweite Losrad 21 übertragen.

Figur 11 zeigt in einer schematischen Darstellung die Situation in der Synchronisierungsphase anhand eines Zahns 45a, der Schaltmuffenverzahnung 45, eines Zahns 43a der Sperrverzahnung 43 und eines Zahns 44a der Schaltkupplungsverzahnung 44 beim Schalten der zweiten Schaltkupplung 31 in die ersten Schaltstellung. Hierbei wird die Schaltmuffe 40 nach links in Richtung auf die Sperrverzahnung 43 bzw. die Schaltkupplungsverzahnung 44 verschoben. Der Vorgang des Schaltens mittels Sperrsynchronisation ist allgemein bekannt und wird daher nicht näher beschrieben.

Der Synchronring legt sich in Drehrichtung entsprechend dem Schleppmomentverhältnis von zweitem Losrad 21 mit den Zähnen 43a der Sperrverzahnung 43 an die Zähne 45a der Schaltmuffenverzahnung 45 an.

Das bleibt auch so, wenn sich das erste Losrad 20 im Schubbetrieb befindet, da das zweite Losrad 21 bei der gezeigten Anordnung grundsätzlich schneller dreht.

Bevor die Zähne 45a der Schaltmuffe 40 den Synchronring 42 verdrehen und damit entsperren gilt:

$$n21 = n20$$

In diesem Zustand sind die Freilaufkörper 56 in einer undefinierten Stellung. Dies bedeutet: Zustand gesperrt oder ungesperrt ist möglich.

Der Synchronring 42 muss gegen die Sperrrichtung der Freilaufeinrichtung 10 verdreht werden, dabei gilt n21 > n20.

Der Synchronring 42 kann mit komplettem zweiten Losrad 21 gegen die Freilaufsperre innerhalb des Freilaufwinkels bzw. Verdrehwinkels Alpha zwischen Verzahnung 72 / Verzahnung 68 freigedreht werden.

Freilaufwinkel/ Verdrehwinkel Alpha und der Gleitsitz zwischen Freilaufaußenring 52 und zweitem Losrad 21 vermeiden die Notwendigkeit, den Synchronring 42 loszubrechen. Dies verringert den Verschleiß der Sperrzähne 43a und eine hohe Schaltkraft oder das Auftreten von sogenannten "Blockern"

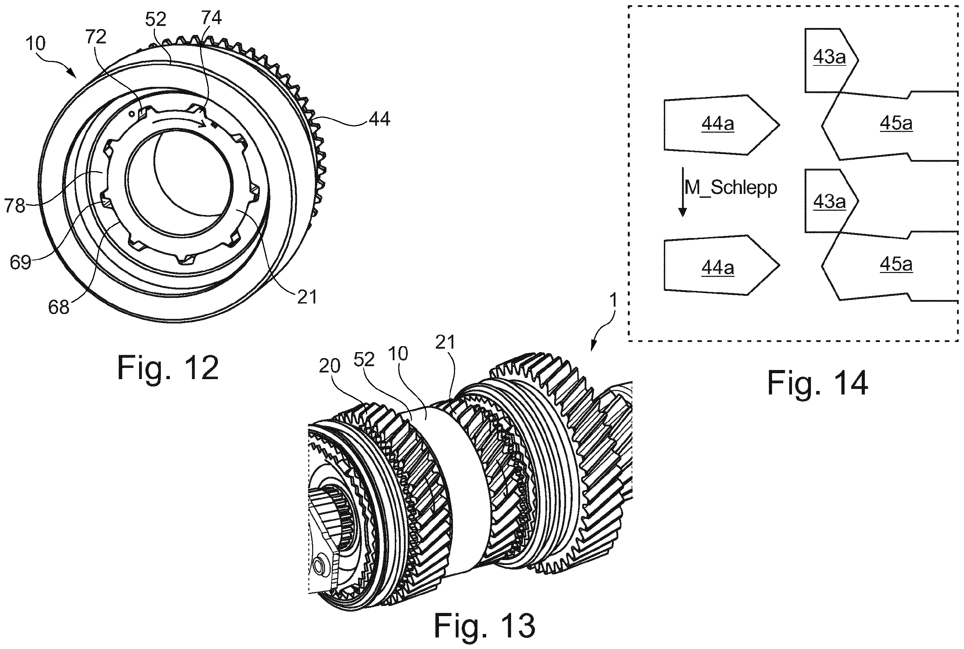

Die Figuren 12, 13 und 14 zeigen die Situation in der anschließenden Freiflugphase.

In der Freiflugphase gilt:

$$n20 < n21$$

Das auftretende Schleppmoment beschleunigt das zweite Losrad 21. Das Federelement 80 stellt aufgrund der Federvorspannung die Ausgangsstellung zwischen Freilaufaußenring 52 und zweiten Losrad 21 wieder her.

Da die Drehzahl n21 > n20 ist, ist die Freilaufeinrichtung 10 offen, d.h. es wird kein Drehmoment übertragen.

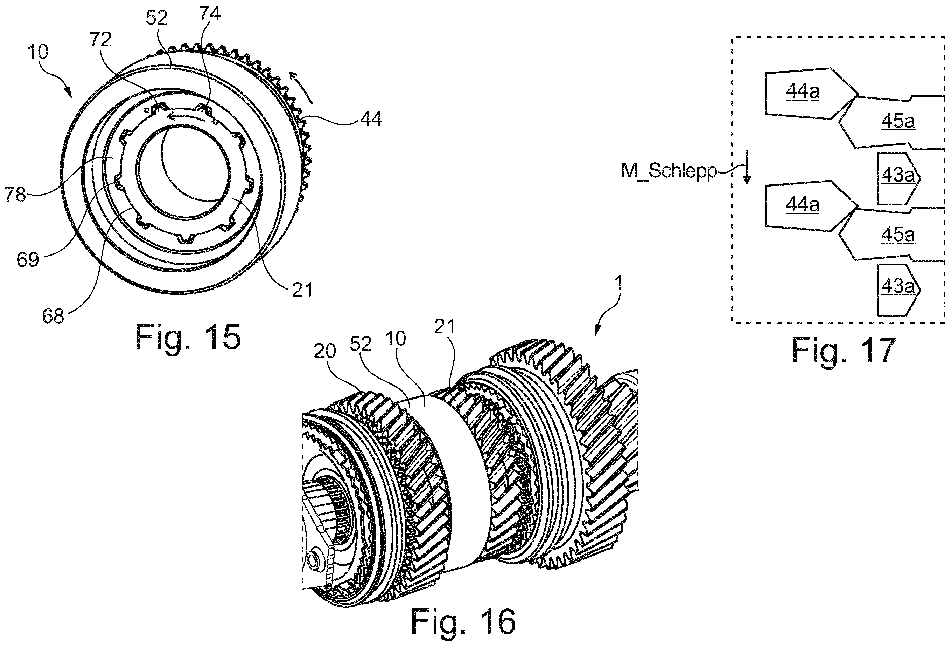

Die Figuren 15, 16 und 17 zeigen die nachfolgende Situation beim Einspuren der Schaltmuffenverzahnung 45 in die Schaltkupplungsverzahnung/Außenverzahnung 44.

In der in der Figur 17 gezeigten Stellung, in der die Zähne 45a der Schaltmuffenverzahnung 45 auf die rechte Flanke der Zähne 44a der Schaltkupplungsverzahnung 44 auftreffen herrscht keine Drehzahldifferenz mehr zwischen erstem Losrad 20 und zweitem Losrad 21: n20 = n21

Der Zustand der Freilaufeinrichtung 10 ist damit undefiniert offen / gesperrt

Beim Einspuren d.h. beim Zahneingriff der Schaltmuffenverzahnung 45 in die Schaltkupplungsverzahnung 44 ist die Drehzahl n20 > n21. Die Freilaufeinrichtung 10 ist gesperrt.

Das zweite Losrad 21 kann in Bezug auf den Freilaufaußenring 52 der Freilaufeinrichtung 10 gegen die Sperre um den Winkel Alpha entsprechend der Verzahnungsverhältnisse gedreht werden.

Der Freilaufwinkel Alpha und der Gleitsitz zwischen zweiten Losrad 21 und Freilaufau-ßenring 52 ermöglichen das Einlegen der Gangstufe gegen die Freilaufsperre im zweiten Funktionszustand der Freilaufeinrichtung 10, wobei eine Blocksituation vermieden wird. Ohne einen derartigen Verdrehwinkel Alpha, d.h. bei einer aus dem Stand der Technik bekannten Freilaufeinrichtung mit drehfest auf dem Losrad angeordneten Freilaufaußenring, würde durch die Schleppmomentrichtung der eine Blocksituation auch beim Wiederholen der Schaltung auftreten, die Gangstufe könnte nicht eingelegt werden.

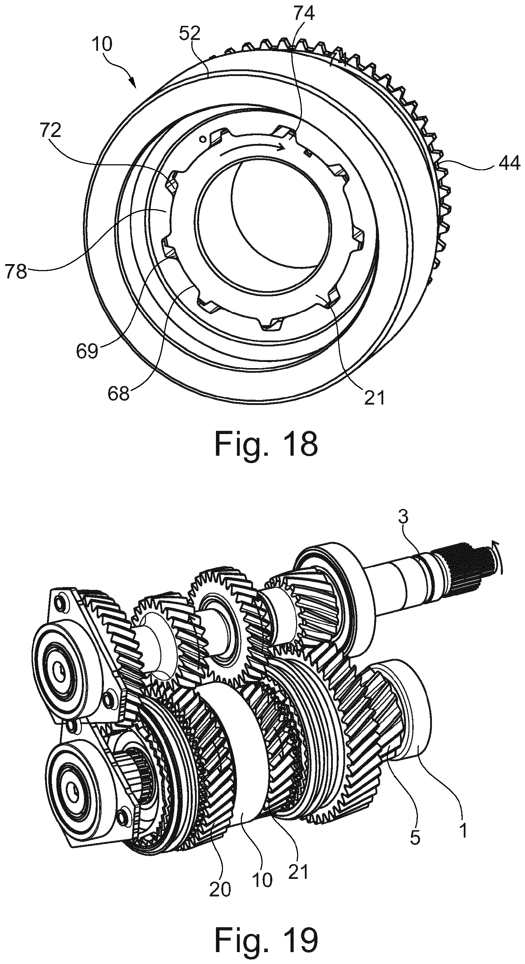

In dem letzten Zustand, der in den Figuren 18 und 19 gezeigt ist, ist die dritte Gangstufe eingelegt und die vierte Gangstufe ist geschaltet. Die Figur 19 zeigt den Leistungsfluss/Drehmomentenfluss über eine Eingangswelle 3 der Getriebeanordnung, die vierte Gangstufe über ein Abtriebsritzel 5. In dieser Situation ist das erste Losrad 20 über die Freilaufeinrichtung 10 mit dem zweiten Losrad 21 gekoppelt und es wird die gewünschte "Bückenschaltung" zur Erzielung einer weiteren Gangstufe, in dem beschriebenen Ausführungsbeispiel der 1. Ganstufe und dem Rückwärtsgang erreicht.

Erstes und zweites Losrad haben in dieser geschalteten Situation die gleichen Drehzahlen n20 = n21

Bezugszeichenliste

| | |
|---|---|
| 1 | Ausgangswelle |
| 2 | Drehachse |
| 3 | Eingangswelle |
| 4a, 4b | Lageranordnungen |
| 5 | Abtriebsritzel |
| 10 | Freilaufeinrichtung |
| 20 | erstes Losrad |
| 21 | zweites Losrad |
| 22 | drittes Losrad |
| 23 | viertes Losrad |
| 30 | erste Schaltkupplung |
| 31 | zweite Schaltkupplung |
| 40 | Schaltmuffe |
| 41 | Synchronkörper |
| 42 | Synchronring |
| 43 | Sperrverzahnung |
| 43a | Zahn |
| 44 | Schaltkupplungsverzahnung/Außenverzahnung |
| 44a | Zahn |
| 45 | Schaltmuffenverzahnung/ Innenverzahnung |
| 45a | Zahn |
| 50 | Freilaufinnenring |
| 52 | Freilaufaußenring |
| 54 | Klemmkörperkäfig |
| 56 | Klemmkörper |
| 58a | innerer Klemmkörperring |
| 58b | äußerer Klemmkörperring |
| 60 | erster ringförmiger Abschnitt |
| 62 | ringförmige Wirkfläche |
| 64 | zweiter ringförmiger Abschnitt |
| 66 | Innenumfang |
| 68 | Verzahnung |
| 69 | Zahnlücken |
| 69a,b | Anschlagflächen |
| 70 | ringförmiger Lagerabschnitt |
| 72 | Verzahnung |
| 74 | Zähne |
| 74a,b | Anschlagflächen |
| 76 | Nut |
| 78 | Axialbohrung |
| 80 | Federelement |
| 81 | ringförmigen Abschnitt |
| 82a | Halteabschnitt |
| 82b | Halteabschnitt |
| 90 | ringförmiger Lagerabschnitt |
| 92 | ringförmige Wirkfläche |

94a       obere Wirkfläche
94b       untere Wirkfläche

**Patentansprüche**

1. Getriebeanordnung die ein erstes Losrad (20), ein zweites Losrad (21), einen Verdrehanschlag und eine umschaltbare Freilaufeinrichtung (10) umfasst,

> - wobei die Freilaufeinrichtung (10) in axialer Richtung auf einer drehbar gelagerten Getriebewelle der Getriebeanordnung zwischen dem ersten Losrad (20) und dem zweiten Losrad (21) angeordnet ist, und folgendes umfasst:
> - einen Freilaufinnenring (50), der drehfest auf dem ersten Losrad (20) gelagert ist
> - einen Freilaufaußenring (52), der koaxial auf dem zweiten Losrad (21) gelagert ist
> - eine zwischen Freilaufinnenring (50) und Freilaufaußenring (52) angeordneten Klemmkörperanordnung (54) die in Umfangsrichtung eine Vielzahl von zueinander beabstandet angeordnete Klemmkörpern (56) umfasst, wobei die Klemmkörper (56) derart gelagert sind, dass in einer ersten Drehrichtung in einem ersten Funktionszustand ein Freilauf zwischen Freilaufaußenring (52) und Freilaufinnenring (50) und in einer entgegengesetzten zweiten Drehrichtung in einem zweiten Funktionszustand zwischen Freilaufaußenring (52) und Freilaufinnenring (50) ein Drehmoment übertragbar ist, und
> - wobei der Freilaufaußenring (52) in Bezug auf das zweite Losrad (21) verdrehbar gelagert ist und diese Verdrehung mittels des Verdrehanschlags auf einen Freilaufwinkel begrenzt ist, wobei der Verdrehanschlag zwischen Freilaufau-ßenring (52) und zweitem Losrads (21) zur Übertragung eines Drehmoments gebildet wird.

2. Getriebeanordnung nach Anspruch 1, **dadurch gekennzeichnet, dass** das zweite Losrad (21) mit einem ringförmigen Lagerabschnitt (70) ausgeführt ist, wobei der Lagerabschnitt (70) eine Verzahnung (72) mit einer Vielzahl von über den Umfang verteilt angeordneter Zähne (74) umfasst, und wobei die Zähne (74) in Umfangsrichtung gesehen beidseits Anschlagflächen (74a, 74b) des Verdrehanschlags ausbilden.

3. Getriebeanordnung nach Anspruch 2, **dadurch gekennzeichnet, dass** der Fußkreis der Verzahnung (72) als Gleitsitz ausgeführt ist.

4. Getriebeanordnung nach einem der vorangehenden Ansprüche, **dadurch gekennzeichnet, dass** der Freilaufaußenring (52) einen ersten ringförmigen Abschnitt (60) umfasst, der an seinem Innenumfang eine ringförmige Wirkfläche (62) für die Klemmkörper (56) bildet und einen axial beabstandet zweiten ringförmigen Abschnitt (64) umfasst, der an seinem Innenumfang (66) mit einer Verzahnung (68) ausgeführt ist, wobei die Verzahnung (68) in Umfangsrichtung Zahnlücken (69) aufweist, wobei die Zahnlücken (69) durch Anschlagflächen (69a, 69b) des Verdrehanschlags begrenzt sind.

5. Getriebeanordnung nach Anspruch 4, **dadurch gekennzeichnet, dass** der Kopfkreis der Verzahnung (68) als Gleitsitz ausgeführt ist.

6. Getriebeanordnung, nach Anspruch 2 bis 5, **dadurch gekennzeichnet, dass** die Verzahnung (72) des zweiten Losrads (21) in die Verzahnung (68) des Freilaufaußenrings (52) greift und in Wirkverbindung derart steht, dass das Losrad (21) in Bezug auf den Freilaufaußenring (52) relativ um den Winkel Alpha verdrehbar um die Drehachse (2) gelagert sind, und wobei der Freilaufwinkel Alpha durch in Umfangsrichtung gesehen vergrößerte Zahnlücken (69) gebildet wird.

7. Getriebeanordnung nach Anspruch 4, **dadurch gekennzeichnet, dass** der erste ringförmige Abschnitt (60) einteilig mit dem Freilaufaußenring (52) ausgeführt ist.

8. Getriebeanordnung nach einem der vorangehenden Ansprüche, **dadurch gekennzeichnet, dass** der Freilaufaußenring (52) zweigeteilt ausgebildet ist und der erste ringförmige Abschnitt (60) als separater Ring ausgeführt ist.

9. Getriebeanordnung nach Anspruch 1, **dadurch gekennzeichnet, dass** der Freilaufinnenring (50) einen ringförmigen Abschnitt (90) umfasst, der an seinem Außenumfang eine ringförmige Wirkfläche (92) für die Klemmkörper (56) bildet.

10. Getriebeanordnung nach Anspruch 9, **dadurch gekennzeichnet, dass** das erste Losrad (20) einteilig mit dem ringförmigen Abschnitt (90) ausgeführt ist.

11. Getriebeanordnung nach Anspruch 9, **dadurch gekennzeichnet, dass** der ringförmige Abschnitt (90) als separater Abschnitt ausgeführt ist und mit dem ersten Losrad (20) drehfest verbunden ist.

12. Getriebeanordnung nach einem oder mehreren der vorangehenden Ansprüche, **dadurch gekennzeichnet, dass** zweites Losrad (21) und Freilaußenring (52) in Bezug auf die Verdrehbarkeit federvorgespannt zueinander angeordnet sind.

13. Getriebeanordnung nach Anspruch 12, **dadurch gekennzeichnet, dass** die Federvorspannung durch ein Federelement (80) gebildet wird, die als Schenkelfeder aus einem Federdraht ausgeführt ist und einen ringförmigen Abschnitt (81) und endseitig ausgeführte Halteabschnitte (82a, 82b) umfasst, wobei ein Halteabschnitt an dem zweiten Losrad (21) und der andere Halteabschnitt an dem Freilaufaußenring (52) festgelegt ist.

**Claims**

1. Transmission arrangement which comprises a first idler wheel (20), a second idler wheel (21), a rotational abutment and a switchable freewheel (10),

   - wherein the freewheel (10) in the axial direction is disposed on a rotatably mounted transmission shaft of the transmission arrangement, between the first idler wheel (20) and the second idler wheel (21), and comprises the following:
   - a freewheel inner ring (50) which is co-rotationally mounted on the first idler wheel (20);
   - a freewheel outer ring (52) which is co-axially mounted on the second idler wheel (21);
   - a clamping element assembly (54) which is disposed between the freewheel inner ring (50) and the freewheel outer ring (52) and in the circumferential direction comprises a multiplicity of clamping elements (58) that are disposed so as to be mutually spaced apart, wherein the clamping elements (56) are mounted in such a manner that in a first rotation direction, in a first functional state, a freewheel is able to be transmitted between the freewheel outer ring (52) and the freewheel inner ring (50), and in an opposite second rotation direction, in a second functional state, a torque is able to be transmitted between the freewheel outer ring (52) and the freewheel inner ring (50); and
   - wherein the freewheel outer ring (52) is mounted so as to be rotatable in relation to the second idler wheel (21), and this rotation is delimited to a freewheel angle by means of the rotational abutment, wherein the rotational abutment for transmitting a torque is formed between the freewheel outer ring (52) and the second idler wheel (21).

2. Transmission arrangement according to Claim 1, **characterized in that** the second idler wheel (21) is embodied with an annular bearing portion (70), wherein the bearing portion (70) comprises a toothing (72) having a multiplicity of teeth (74) that are disposed so as to be distributed across the circumference, and wherein the teeth (74), when viewed in the circumferential direction, form abutment faces (74a, 74b) of the rotational abutment on both sides.

3. Transmission arrangement according to Claim 2, **characterized in that** the root circle of the toothing (72) is embodied as a sliding fit.

4. Transmission arrangement according to one of the preceding claims, **characterized in that** the freewheel outer ring (52) comprises a first annular portion (60) which on its internal circumference forms an annular active face (62) for the clamping elements (56), and comprises a second annular portion (64) which is axially spaced apart and on its internal circumference (66) is embodied with a toothing (68), wherein the toothing (68) has tooth gaps (69) in the circumferential direction, wherein the tooth gaps (69) are delimited by abutment faces (69a, 69b) of the rotational abutment.

5. Transmission arrangement according to Claim 4, **characterized in that** the tip circle of the toothing (68) is embodied as a sliding fit.

6. Transmission arrangement according to Claims 2 to 5, **characterized in that** the toothing (72) of the second idler wheel (21) engages in the toothing (68) of the freewheel outer ring (52) and is operatively connected thereto in such a manner that the idler wheel (21) in terms of the freewheel outer ring (52) is mounted so as to be rotatable relative to the latter by the angle $\alpha$ about the rotation axis (2), and wherein the freewheel angle $\alpha$ is formed by tooth gaps (69) that are enlarged when viewed in the circumferential direction.

7. Transmission arrangement according to Claim 4, **characterized in that** the first annular portion (60) is embodied so as to be integral to the freewheel outer ring (52).

8. Transmission arrangement according to one of the preceding claims, **characterized in that** the freewheel outer ring (52) is configured in two parts, and the first annular portion (60) is embodied as a separate ring.

9. Transmission arrangement according to Claim 1, **characterized in that** the freewheel inner ring (50) comprises an annular portion (90) which on its external circumference forms an annular active face (92) for the clamping elements (56).

10. Transmission arrangement according to Claim 9, **characterized in that** the first idler wheel (20) is embodied so as to be integral to the annular portion (90).

11. Transmission arrangement according to Claim 9, **characterized in that** the annular portion (90) is embodied as a separate portion and is co-rotationally connected to the first idler wheel (20).

**12.** Transmission arrangement according to one or a plurality of the preceding claims, **characterized in that** the second idler wheel (21) and the freewheel outer ring (52) are disposed so as to be mutually spring pre-loaded in terms of rotatability.

**13.** Transmission arrangement according to Claim 12, **characterized in that** the spring preload is formed by a spring element (80) which is embodied as a leg spring from a spring wire and comprises an annular portion (81) and holding portions (82a, 82b) embodied on the end sides, wherein one holding portion is established on the second idler wheel (21), and the other holding portion is established on the freewheel outer ring (52).

**Revendications**

**1.** Agencement de transmission, qui comprend un premier pignon fou (20), un deuxième pignon fou (21), une butée de rotation et un dispositif de roue libre commutable (10),

- le dispositif de roue libre (10) étant agencé dans la direction axiale sur un arbre de transmission de l'agencement de transmission, monté à rotation, entre le premier pignon fou (20) et le deuxième pignon fou (21), et comprenant les éléments suivants :
- une bague intérieure de roue libre (50), qui est montée solidairement en rotation sur le premier pignon fou (20),
- une bague extérieure de roue libre (52), qui est montée coaxialement sur le deuxième pignon fou (21),
- un agencement de corps de serrage (54) agencé entre la bague intérieure de roue libre (50) et la bague extérieure de roue libre (52), qui comprend dans la direction circonférentielle une pluralité de corps de serrage (56) agencés à distance les uns des autres, les corps de serrage (56) étant montés de telle sorte que, dans une première direction de rotation, dans un premier état de fonctionnement, une roue libre peut être transmise entre la bague extérieure de roue libre (52) et la bague intérieure de roue libre (50) et, dans une deuxième direction de rotation opposée, dans un deuxième état de fonctionnement, un couple de rotation peut être transmis entre la bague extérieure de roue libre (52) et la bague intérieure de roue libre (50), et
- la bague extérieure de roue libre (52) étant montée de manière à pouvoir tourner par rapport au deuxième pignon fou (21) et cette rotation étant limitée à un angle de roue libre au moyen de la butée de rotation, la butée de rotation étant formée entre la bague extérieure de roue libre (52) et le deuxième pignon fou (21) pour transmettre un couple de rotation.

**2.** Agencement de transmission selon la revendication 1, **caractérisé en ce que** le deuxième pignon fou (21) est réalisé avec une section de palier annulaire (70), la section de palier (70) comprenant une denture (72) avec une pluralité de dents (74) agencées de manière répartie sur la circonférence, et les dents (74) formant des surfaces de butée (74a, 74b) de la butée de rotation des deux côtés, vues dans la direction circonférentielle.

**3.** Agencement de transmission selon la revendication 2, **caractérisé en ce que** le cercle de base de la denture (72) est réalisé sous forme d'ajustement glissant.

**4.** Agencement de transmission selon l'une quelconque des revendications précédentes, **caractérisé en ce que** la bague extérieure de roue libre (52) comprend une première section annulaire (60) qui forme sur sa circonférence intérieure une surface active annulaire (62) pour les corps de serrage (56) et comprend une deuxième section annulaire (64) espacée axialement, qui est réalisée avec une denture (68) sur sa circonférence intérieure (66), la denture (68) présentant des entredents (69) dans la direction circonférentielle, les entredents (69) étant délimités par des surfaces de butée (69a, 69b) de la butée de rotation.

**5.** Agencement de transmission selon la revendication 4, **caractérisé en ce que** le cercle de tête de la denture (68) est réalisé sous forme d'ajustement glissant.

**6.** Agencement de transmission selon les revendications 2 à 5, **caractérisé en ce que** la denture (72) du deuxième pignon fou (21) s'engrène dans la denture (68) de la bague extérieure de roue libre (52) et est en liaison active de telle sorte que le pignon fou (21) est monté par rapport à la bague extérieure de roue libre (52) de manière à pouvoir tourner relativement de l'angle alpha autour de l'axe de rotation (2), et l'angle de roue libre alpha étant formé par des entredents (69) agrandis vus dans la direction circonférentielle.

**7.** Agencement de transmission selon la revendication 4, **caractérisé en ce que** la première section annulaire (60) est réalisée d'une seule pièce avec la bague extérieure de roue libre (52).

**8.** Agencement de transmission selon l'une quelconque des revendications précédentes, **caractérisé en ce que** la bague extérieure de roue libre (52) est configurée divisée en deux parties et la première section annulaire (60) est réalisée sous forme de bague séparée.

9. Agencement de transmission selon la revendication 1, **caractérisé en ce que** la bague intérieure de roue libre (50) comprend une section annulaire (90), qui forme sur sa circonférence extérieure une surface active annulaire (92) pour les corps de serrage (56).

10. Agencement de transmission selon la revendication 9, **caractérisé en ce que** le premier pignon fou (20) est réalisé d'une seule pièce avec la section annulaire (90).

11. Agencement de transmission selon la revendication 9, **caractérisé en ce que** la section annulaire (90) est réalisée sous forme de section séparée et est reliée de manière solidaire en rotation avec le premier pignon fou (20).

12. Agencement de transmission selon une ou plusieurs des revendications précédentes, **caractérisé en ce que** le deuxième pignon fou (21) et la bague extérieure libre (52) sont agencés de manière à être précontraints par ressort l'un par rapport à l'autre en termes de capacité de rotation.

13. Agencement de transmission selon la revendication 12, **caractérisé en ce que** la précontrainte par ressort est formée par un élément à ressort (80) qui est réalisé sous forme de ressort à branches en un fil à ressort et qui comprend une section annulaire (81) et des sections de retenue (82a, 82b) réalisées aux extrémités, une section de retenue étant fixée au deuxième pignon fou (21) et l'autre section de retenue étant fixée à la bague extérieure de roue libre (52).

Fig. 1

54 56 94a 58b 58a

## Fig. 2

94b

54 56 52 21
60
68
94a 72 62 69

## Fig. 3

Fig. 4b

Fig. 4d

Fig. 4a

Fig. 4c

Fig. 5

Fig. 6

Fig. 7

Fig. 8

Fig. 9

Fig. 10

Fig. 11

M_Schlepp

44a

43a

45a

EP 4 080 076 B1

Fig. 12

Fig. 13

Fig. 14

M_Schlepp

EP 4 080 076 B1

Fig. 17

45a

43a

45a

43a

44a

44a

M_Schlepp

Fig. 16

1

21

10

52

20

Fig. 15

44

74

52

72

10

21

78

69

68

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013104468 A1
- WO 2017220493 A1
- DE 102008017876 B4
- DE 102016223102 A1
- DE 102020107957 A1